# EUROPEAN PATENT SPECIFICATION

(11) **EP 3 150 266 B1**
(45) Date of publication and mention of the grant of the patent: **01.09.2021**
(21) Application number: 16189506.5
(22) Date of filing: 19.09.2016
(51) Int. Cl.: B03C 1/30, B01D 21/26, B01D 21/00, B03C 1/28, B01D 21/24, B04C 5/103, F24D 19/00, B03C 1/033

(54) **SOLID PARTICLES-FLUIDS SEPARATOR**
FESTPARTIKEL-FLUID-ABSCHEIDER
SÉPARATEUR PARTICULES SOLIDES-FLUIDES

(30) Priority: 24.09.2015 IT UB20153859
(43) Date of publication of application: 05.04.2017
(73) Proprietor: FIMCIM S.P.A., 20121 Milano (MI) (IT)
(72) Inventor: CIMBERIO, Roberto, 28010 AMENO FRAZ. VACCIAGO (NO) (IT); CIMBERIO, Renzo, 28017 SAN MAURIZIO D'OPAGLIO (NO) (IT)
(74) Representative: PGA S.p.A., Milano, Succursale di Lugano

(56) References cited:
- EP-A1- 2 039 413
- DE-A1- 19 717 869
- GB-A- 2 502 278
- US-A- 3 504 804
- None

## Description

### FIELD OF THE INVENTION

The object of the present invention is a separator for solid particles-fluids, particularly for water, a process for making the same separator and a method for separating solid particles from a fluid. The separator, according to the present invention, can be used in hydraulic, thermal plants, for example household and/or industrial conditioning and/or heating plants.

### STATE OF THE ART

The fluid flowing in a heating and/or conditioning thermal plant typically entrains a quantity of solid particles due to the dirt present or formed in the same fluid, and metal and non-metal particles formed due to the corrosion inside the pipes and/or from other apparatuses present in the plant.

These particles tend towards building up inside the operative devices of the plant - pumps, valves and exchangers, for example - which consequently alter the operation of the same devices; firstly, the built-up of these particles can alter in an uncontrolled way the design parameter of the plant, therefore reducing the overall efficiency or even causing failures.

For overcoming this disadvantage, solid particles cyclone-type separators provided with a magnet placed inside the separator have been developed; the cyclone configuration of the separator enables to collect the non-ferromagnetic solid particles on the bottom of the separator while the magnet retains the metal particles.

Generally, these separators consist in a tubular casing having a circular cross-section exhibiting a fluid inlet placed tangent to the lateral wall of the casing itself; the tangent fluid inlet in the casing enables to generate a cyclone trend of the water: the solid particles contained in the fluid are thrusted towards an outer wall delimiting such path and are then collected on the bottom of the separator. A magnet having an elongated cylindrical shape placed concentrically to the case is engaged inside the casing; the magnet is configured for attracting to it and therefore retaining the ferrous solid particles present in the fluid. The fluid substantially devoid of solid particles is ejected through a radial outlet of the casing.

An example of a cyclone separator is described in the international patent application No. WO2009/122127A1. Particularly, the separator comprises a circular cross-section containing body exhibiting an upper cylindrical cross-section connected to a conical lower cross-section. A tubular body, which is also cylindrical is engaged only inside the upper cross-section and is placed concentrically with the latter. The tubular body defines inside the upper cross-section an outer chamber, directly fluidically communicating with an inlet of the separator, and an inner chamber, directly fluidically communicating with an outlet of the separator. Water flows from the inlet to the outer chamber in which a fluid cyclone motion is generated wherein the solid particles are separated from water by means of the generated centrifugal force, which continues in the conical part (lower cross-section). Then the fluid flows up from the conical part and enters the inner chamber - defined by the inner lateral surface of the tubular body - communicating with the outlet. A magnet configured for attracting metal particles suspended in water and passing from the inner chamber is disposed inside the tubular body.

Document DE19717869A1 discloses a filter assembly removing ultra-fine sludge from water in a central heating system. The filter incorporates a number of metal baffle panels arranged in a series of chicanes. Magnets are affixed to the baffle panels providing a horizontal magnetic field with respect to the vertical flow of water. The assembly has a perforated baseplate straddling the lower edges of the chicane baffle panels and over a sediment collection pan. A double-walled filter gauze immediately precedes the water outlet. The magnetic fields and the filter gauze are incorporated in the same assembly. The water flow is divided into two to force-meander between the baffle plates. The magnets are able to withstand a temperature of 150° C without measurable drop in performance.

Document US3,504,804 discloses a centrifugal separator for separating solid particles from a liquid. The separator comprises an inlet chamber including means for tangentially introducing a stream of solids-containing liquid under pressure to the upper portion of the inlet chamber, α generally frusto-conical separation chamber having its larger end in fluid communication with the lower portion of the inlet chamber, a clarified liquid exit conduit extending through the inlet chamber and into the separation chamber axially thereof for removing clarified liquid and an outlet conduit near the smaller end of the separation chamber for removing concentrated slurry containing separated solid particles. Separation of the solid particles from the liquid is effected by vortexing the solids-containing liquid in the inlet chamber and in the separation chamber to create a centrifugal force to cause the solid particles to migrate radially outward toward the confining wall of the separation chamber there to settle along its sloping wall and collect near the lower slurry outlet, thereby creating an area of relatively clarified liquid near the central axis of the separation chamber in the vicinity of the clarified liquid exit conduit. The separator further comprises means within the separation chamber to direct a portion of the vortexing liquid within the separation chamber outward toward the wall of the chamber to thereby increase the separation of solidparticles along the inwardly sloping wall of the separation chamber.

Document GB2502278A discloses a separator device for removing particles from suspension in a fluid comprising α housing, having a central axis extending between first and second opposing ends, an inlet and an outlet provided in an end of the housing and a separation chamber for separating solid particles from the fluid, including obstruction means to slow the flow of fluid within the chamber. The obstruction means includes curved walls forming concave collection areas for collection of particles. A cylindrical magnet is provided inside a hollow central section of an insert to attract ferrous particles collecting on the outer surface of a central sheath section of the insert. The separator device is used in heating systems where the vertical space required for installation of the device is substantially less than the space required by a device which is mounted with the central axis vertically.

Document EP2039413A1 discloses a method for operating a gas-solid separator that has an inner cylinder having a closed lower end and an opened upper end and extending in a vertical direction, an outer cylinder that coaxially covers the inner cylinder from the outside and has a gas vent port formed on the upper end side of the inner cylinder and communicating with an exterior and a plurality of axially extending long holes formed on a side surface on the lower end side of the inner cylinder in a circumferential direction, one of long side edge parts of each of the long holes being provided with a guide blade that protrudes outward and is inclined circumferentially so as to cover the long hole.

While the above described known separators enable to recover part of the dispersed solid particles in a fluid, the Applicant has found that the preceding implemented approaches are not devoid of inconveniences and therefore are improvable under several aspects.

De facto, the known above described separators are capable of generating the fluid cyclone effect due to a complicated and cumbersome structure, and particularly a configuration of the inner channels of the separator extremely difficult to implement on an industrial and automatized scale; the complex structure of the known above described separators makes the process of manufacturing the same (manufacturing the single elements and assembling the same) time-consuming and somewhat expensive.

### OBJECT OF THE INVENTION

Therefore, the object of the present invention consists of substantially solving at least one of the disadvantages and/or limitations of the preceding solutions.

A first object of the invention consists of providing a separator capable of effectively separating from a fluid, particularly from a liquid, ferrous and non-ferrous particles. An object of the present invention consists of providing a separator exhibiting a simpler and possibly more compact structure adapted to ensure an efficient separation of the solid particles from a fluid.

It is also described a process for making a solid particles-fluids separator which is simple and fast, therefore capable of making a separator at a reasonable cost.

One or more of the above described objects which will better appear during the following description, are substantially met by a solid particles separator, a process for making the same and a method for separating solid particles from a fluid, according to the following description and/or one or more of the accompanying claims.

### BRIEF DESCRIPTION OF THE DRAWINGS

Some embodiments and some aspects of the invention will be described in the following with reference to the attached drawings, given only in an indicative and therefore non limiting way, wherein:
- Figure 1 is a perspective view of a separator according to the present invention;
- Figure 2 is an exploded view of a separator according to the present invention;
- Figure 3 is a detail of a feature of a separator according to the present invention;
- Figure 4 is a cross-section view, along the line IV-IV, of the feature in Figure 3;
- Figures 5 and 6 are respective longitudinal and transversal cross-section views of the separator according to the present invention;
- Figures from 7 to 12 are schematic views of a diverter, component of the separator according to the present invention;
- Figures from 13 to 15 are schematic views of a process for making a diverter of the separator according to the present invention.

### MATERIALS AND DEFINITIONS

The figures could illustrate the object of the invention by a not in scale representation; therefore, parts and components illustrated in the figures in relation to the object of the invention could only refer to schematic representations.

The term "solid particles" means a suspension of a ferrous and/or non-ferrous material finely subdivided and dispersed in a fluid, particularly a liquid such as for example water. Particularly, the suspension is defined by a component at a solid state finely dispersed in the main component which is at a liquid state.

The separator can be made at least partially of a metal material, for example, it can be made by using at least one selected in the group of the following metal materials: steel, brass, bronze, copper and alloys thereof, aluminum and alloys thereof.

Further, the separator can be made at least partially (or completely) in a plastic material; for example, it can be made by using at least one selected in the group of the following materials: ABS, PPS, PSU, PE, PTFE, PVC, PET.

In an embodiment variant, the separator can be made by using both a metal material, and a plastic material as hereinbefore listed.

### DETAILED DESCRIPTION

### Separator of solid particles from fluids

With reference to the attached figures, 1 generally indicates a particles separator, for example useable in heating or conditioning plants, both for industrial and household use. The separator 1 is configured for receiving through a fluid, particularly a liquid (such as water), and treating it for enabling to effectively separate the solid particles from the fluid flow flowing through the separator 1 in order to define at the outlet a "clean" liquid flow: the "clean" flow exiting the separator 1 is destined to be circulated in said heating or conditioning plants. Particularly, the separator 1 is configured for separating from the fluid flow at least part of the solid particles by a mechanical effect; generally, but not necessarily, the separator is configured also for retaining by a magnetic effect solid ferromagnetic particles.

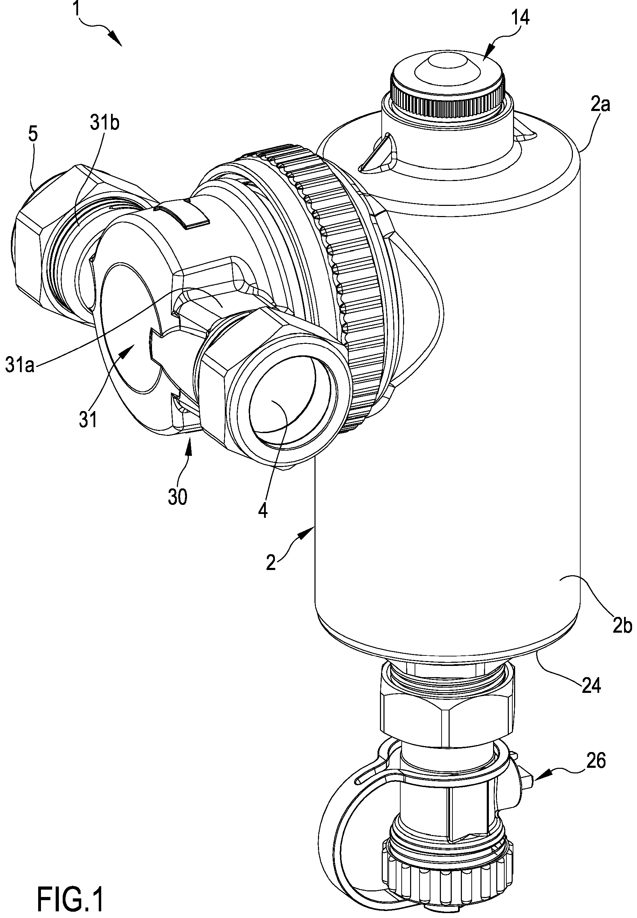

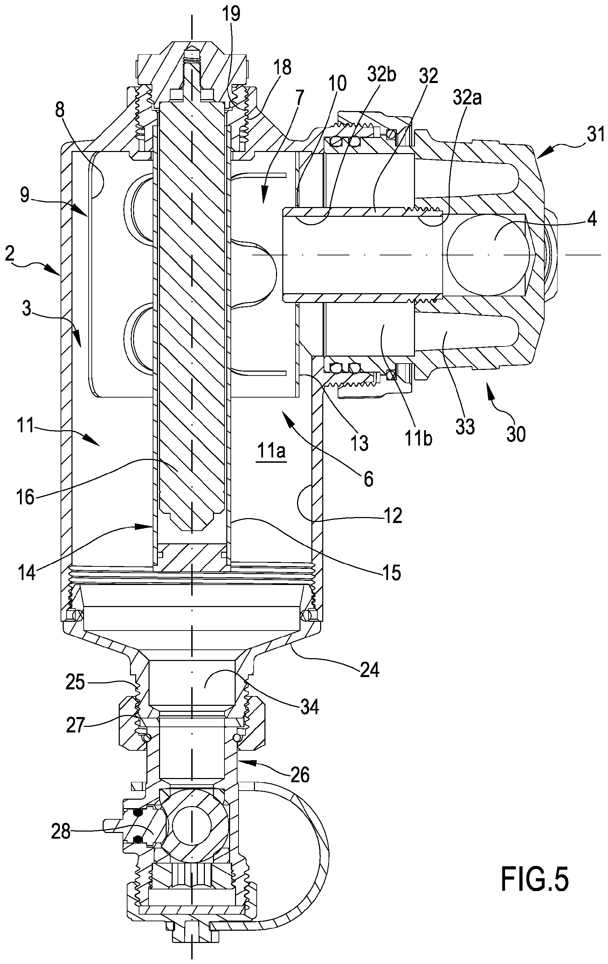

As it is visible in Figures 1 and 5 for example, the separator 1 comprises at least one containing body 2 defined, in a non limiting way, by a tubular body having a substantially circular cross-section (more generally an axisymmetric one), which, as illustrated in Figure 1, develops along a prevalent development direction between a first and second end portions 2a, 2b. It is not excluded the possibility of making a containing body 2 having, for example, a frusto-conical (possibly only the lower portion) cross-section, or also a square or elliptical one. The containing body 2 defines inside a housing compartment 3 which is delimited by an inner lateral surface 12 of the containing body 2 (Figure 5).

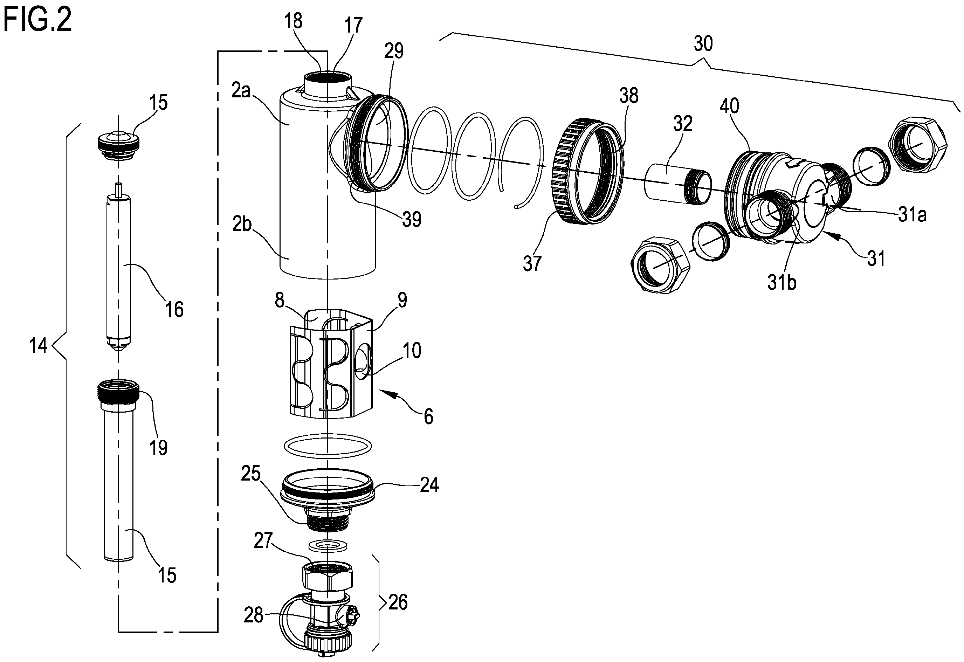

As it is visible in Figure 2 for example, the containing body 2 exhibits, at the first end portion 2a, a through opening 17 extending parallelly to the development direction of the body 2 and configured for enabling to gain access to the housing compartment 3 from the outside of the containing body 2; the through opening 17 is delimited by a free edge exhibiting a closed outline having for example a circular shape. At the through opening 17, it is defined an engagement portion 18 destined to enable to engage a magnetic device 14 with the containing body 2, as it will be described more particularly in the following. The engagement portion 18 comprises a neck emerging from the body 2 outside the housing compartment 3 and exhibiting a thread which is configured for engaging a respective thread of the magnetic device 14. The accompanying figures illustrate an embodiment of the neck (engagement portion 18) having an inner thread; it is not excluded the possibility of making an engagement portion 18 comprising an outer thread, a quick-coupling engagement portion or a bayonet portion, or another preferably removable hooking system.

Moreover, the containing body 2 comprises, substantially at the first end portion 2a, at least one inlet 4 and at least one outlet 5 respectively configured for enabling to introduce and discharge a fluid from the separator 1. The accompanying figures illustrate, in a non limiting way, an embodiment of the containing body 2 comprising at least one access 29 crossing a lateral wall of the containing body 2. The access 29 develops normal to the prevalent development direction of the body 2 and is delimited by a free edge exhibiting a closed outline having, in a non limiting way, a circular shape. The accompanying figures represent a non limiting embodiment of the invention wherein the access 29 exhibits a development axis of the circular cross-section whose extension intercepts a longitudinal development axis of the circular cross-section of the tubular containing body; in other words, the access 29 is aligned and centered on the lateral wall of the body 2 with respect to the prevalent development axis of the body 2 having a tubular shape (the access 29 is aligned). It is not excluded the possibility of defining an access 29 offset from the axis of the tubular body 2; under such condition, the access development axis will be spaced by a determined distance different from zero from the development axis of the tubular body 2.

At the access 29, both the inlet 4 and outlet 5 are defined so that the fluid can flow both entering and exiting the access 29.

Although, in the following description, it will be made reference to the accompanying drawings by indicating always the inlet with reference 4 and the outlet with reference 5, it is stressed that the inlet and outlet could be exchanged, in other words, the device represented and described in the following could be equally configured so that the inlet is the one shown in figures by reference 5 and the outlet by reference 4. For the convenience of the reader, the herein indicated option will not be repeated again in the following description, however it is understood that any reference to the inlet 4 and outlet 5 is alternatively understood as outlet 4 and inlet 5.

More particularly and as it is visible in Figure 2, at the access 29 it is defined an engagement portion 39 destined to enable to engage one distributing head 30 with the containing body 2, configured for hydraulically managing the entrance or egress of the fluid from the single access 29. The engagement portion 39 comprises a neck emerging from the body 2 outside the housing compartment 3 and having a thread which, as it will be seen in the following, is configured for engaging a respective thread of the distributing head 30. The attached figures represent an embodiment of the neck (engagement portion 39) having an outer thread; it is not excluded the possibility of making an engagement portion 39 comprising an inner thread, a quick-coupling engagement or bayonet engagement portion, or another fixed, adjustable or removable engagement system.

The distributing head 30 substantially comprises a neck having a tubular shape, optionally a cylindrical one, and exhibiting an engagement portion 40 configured for being stably constrained to the engagement portion 39 of the access 29 so that the neck and access are fluidically communicating with each other: under an engagement condition, the head neck is fluidically communicating, through the access 29, with the housing compartment 3 of the containing body 2. The accompanying figures illustrate a configuration of the head 30 comprising an intermediate connecting element 37, for example consisting in a threaded ring-nut which is configured for engaging, on one side, the portion 39 of the access 29 and, from the other side, receiving the engagement portion 40 of the head 30: therefore, the element 37 is configured for indirectly constraining the head to the containing body.

More particularly, the ring-nut 37 exhibits an engagement (threaded) portion 38 configured for reversibly engaging with the corresponding engagement (threaded) portion 39 of the containing body 2; moreover, the ring-nut 37 is also constrained (by interposing a Seeger ring of a type illustrated in Figure 2) to the distributing head 30 itself so that it can freely rotate with respect to the same while being axially locked.

However, it is not excluded the possibility of defining a head 30 whose engagement portion 40 is directly constrainable to the engagement portion 39 of the access 29 for example by a quick-coupling, a bayonet engagement or by threaded portions, or another fixed, adjustable or removable engagement.

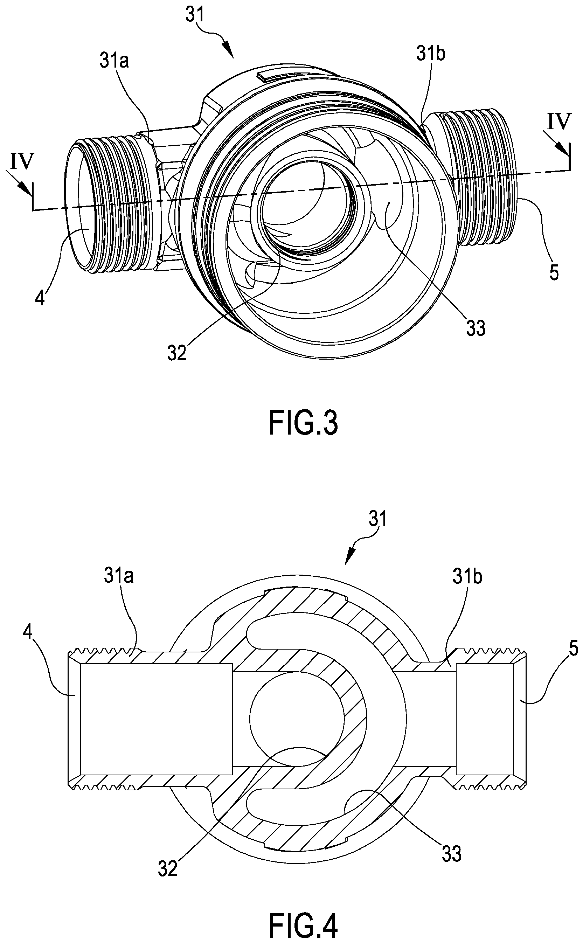

In an embodiment, the neck of the distributing head 30 has inside a conduit 32 defining the inlet 4 and a separate conduit 33 for the fluid outlet 5. The conduits 32 and 33 can be disposed concentrically with each other as illustrated in Figures 3 and 4, for example.

The accompanying figures illustrate, in a non limiting way, a configuration wherein the conduit 32 of the inlet 4 substantially comprises a central pipe having, for example a circular shape, around which the conduit 33 of the outlet 5 is defined: de facto, the conduit 33 of the outlet 5 is defined by an outer lateral surface of the conduit 32 and an inner lateral surface of the neck of the distributing head 30 itself (see Figure 4, for example).

More particularly, the conduit 32 of the inlet 4 extends between a first and second end portions 32a, 32b (Figure 5), along a development axis transversal (particularly normal) to the development axis of the containing body 2 (see Figure 2). The conduit 33 diametrally develops around the conduit of the inlet 4 and therefore also the conduit 33 develops at least partially along a development axis transversal to and intercepting the development axis of the body (outlet 5) coaxial with the conduit 32 of the inlet 4. Moreover, part of the conduit 33 of the outlet 5 annularly develops around the conduit 33 of the inlet 4.

In an embodiment illustrated in the accompanying figures, the distributing head 30 comprises an attachment device 31 including the coaxial conduits 32 and 33 defining at least partially the inlet 4 and outlet 5, and a first and second outer attachment manifolds 31a, 31b respectively fluidically communicating with the conduit 32 of the inlet 4 and with the conduit 33 of the outlet.

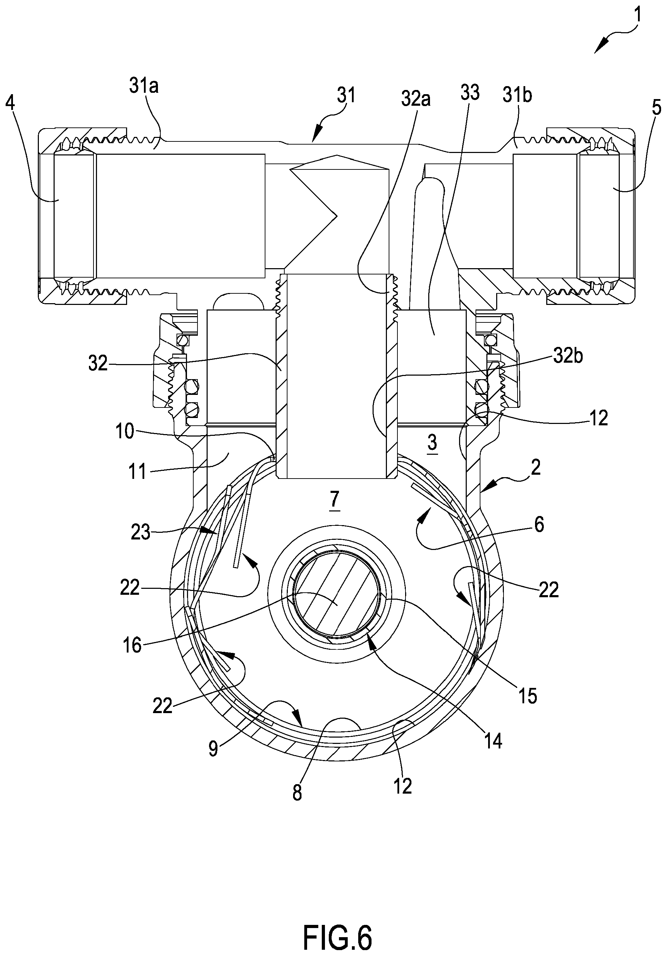

The first outer attachment manifold 31a substantially comprises a hollow cylindrical pipe connected, at an end, to the conduit 32; the first manifold 31a extends along a prevalent development direction substantially normal to the prevalent development direction of the conduit 32; the first manifold 31a is directly fluidically communicating with the conduit 32 and is configured for being connected to a fluid distributing piping for sequentially supplying the conduit 32 and containing body 2. The second manifold 31b comprises substantially also a hollow cylindrical pipe connected, at an end, to the conduit 32 of the outlet 5; the second manifold 31b extends along a prevalent development direction substantially normal to the prevalent development direction of the conduit 33: the second manifold 31b is directly fluidically communicating with the conduit 33 and is configured for being connected to an outlet piping of the fluid for enabling to eject the fluid from the containing body 2. Advantageously but in a non limiting way, the second manifold 31b extends along a prevalent development direction parallel to the development direction of the first manifold 31a, but oppositely to this latter in order to define an attachment device 31 having a substantially "T" shape (see Figure 6, for example).

The accompanying figures illustrate a configuration of the containing body 2 wherein the inlet 4 and outlet 5 are defined at a single access 29 of the body itself (the inlet 4 and outlet 5 are at least partially coaxial - see for example Figure 5); however, it is not excluded the possibility of providing a containing body 2 exhibiting two distinct accesses, for example opposite to each other with respect to the containing body 2 itself, respectively configured for communicating with the inlet and outlet. In this last described configuration, the inlet and outlet are distinct and spaced from each other (this configuration is not illustrated in the accompanying figures).

As illustrated in Figure 1 and in Figure 5, further the containing body 2 exhibits a bottom portion 24 configured for enabling to collect (by gravity and cyclone effect) the solid particles suspended in the fluid flow circulating in the separator 1. The bottom portion 24 is disposed at the second end portion 2b of the containing body 2. The bottom portion 24 comprises a neck defined from the second end portion 2b of the containing body 2 away from the first end portion 2a. The narrowing of the bottom portion 24 can be substantially shaped as a funnel.

As it is visible in the cross-section view in Figure 5 for example, the bottom portion comprises an auxiliary outlet 34 (normally closed) configured for possibly enabling to discharge the fluid from the bottom portion 24. De facto, the bottom portion is substantially a base for collecting solid particles entrained by the fluid, open on the bottom and communicating with the inlet 4 and outlet 5.

The bottom portion 24 comprises, at an end opposite to the first end portion 2a of the body 2, an engagement portion 25 (see Figures 2 and 5, for example) configured for enabling a stable, but at the same time reversible engagement with a respective engagement portion 27 of a discharge tap 26. The figures represent an engagement portion 25 of the bottom portion 24 having an outer thread; however, it is not excluded the possibility of making an engagement portion 25 comprising an inner thread, a quick-coupling engagement portion or a bayonet portion, or similar.

As it is visible, the containing body 2 comprises, downstream the auxiliary outlet 34, a discharge tap 26 engaged with the bottom portion so that this latter is interposed between the end portion 2b of the containing body 2 and tap 26.

As it is visible in Figure 5 for example, the tap 26 is provided with an engagement portion 27 configured for enabling to engage the discharge tap 26 with the engagement portion 25 of the bottom portion 24. The figures represent an engagement portion 27 of the discharge tap 26 having an inner thread; however, it is not excluded the possibility of making an engagement portion 27 comprising an outer thread, a quick-coupling engagement portion or a bayonet portion, or another fixed, adjustable or removable engagement.

More particularly and as it is visible in the exploded view in Figure 2, the discharge tap 26 comprises an assembly 28 provided with an actuating member and an intercepting element whose operative position is managed by the actuating member itself. The discharge tap 26 is engaged at the auxiliary outlet 34 and is configured for defining a first operative condition wherein it prevents the fluid passage from the tap 26, and a second operative condition wherein enables the fluid passage from the same tap 26. From the operative point of view of the tap 26, in the first operative condition, it enables to collect and build up solid particles in the bottom portion 24 of the containing body 2 (it prevents the fluid and solid particles collected on the bottom portion from exiting the housing compartment 3), while, in the second operative condition, enables to discharge the fluid and solid particles built up on the bottom portion of the containing body 2. The first and second operative conditions are characterized by a different operative position of the intercepting element 28.

As it is visible in Figures 5 and 6 for example, a diverter 6 (this component is specifically illustrated in the following Figures from 7 to 12) is engaged inside the housing compartment 3, which is operatively interposed between the inlet 4 and outlet 5. From the geometrical point of view, the diverter 6 longitudinally (axially) extends along a predetermined development direction D between a first and second longitudinal ends 6a, 6b (see Figures from 7 to 12); the accompanying figures represent, in a non limiting way, a diverter 6 extending substantially along the direction D or defining an axially elongated body. It is not excluded the possibility of making the diverter 6 substantially axially compact exhibiting an extension along the direction D less than a maximum transversal size measured normal to the direction D (this configuration is not illustrated in the accompanying figures).

As illustrated in Figure 5, the diverter 6 is substantially coaxial with the containing body 2. The diverter 6 exhibits a lateral wall 9 provided with an reciprocally opposite inner lateral surface 8 and an outer lateral surface 13. As it is visible in the accompanying figures, the diverter 6 further defines a through seat 20 extending along the development direction D and delimited by the inner lateral surface 8 of the lateral wall 9.

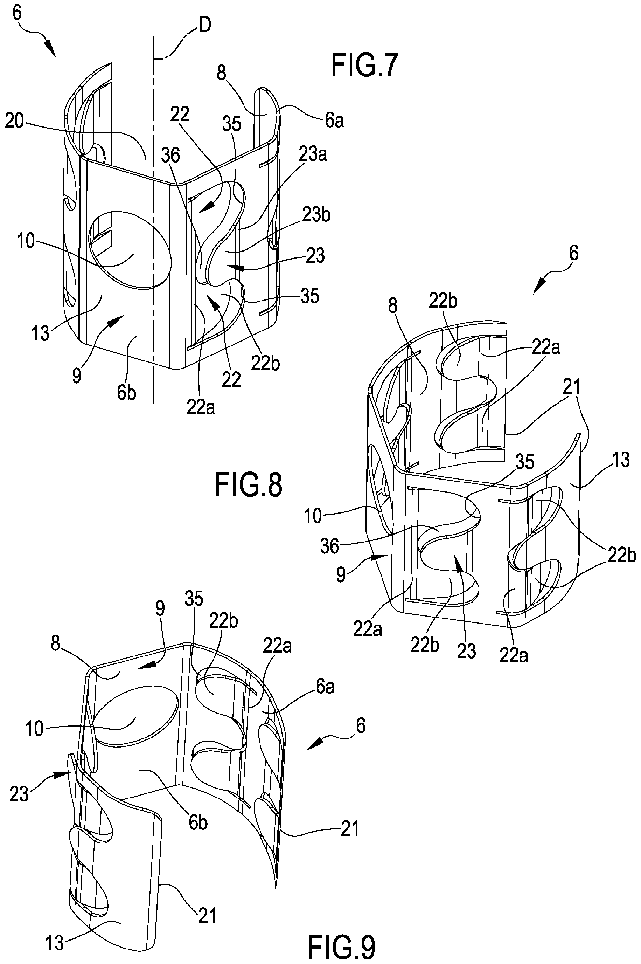

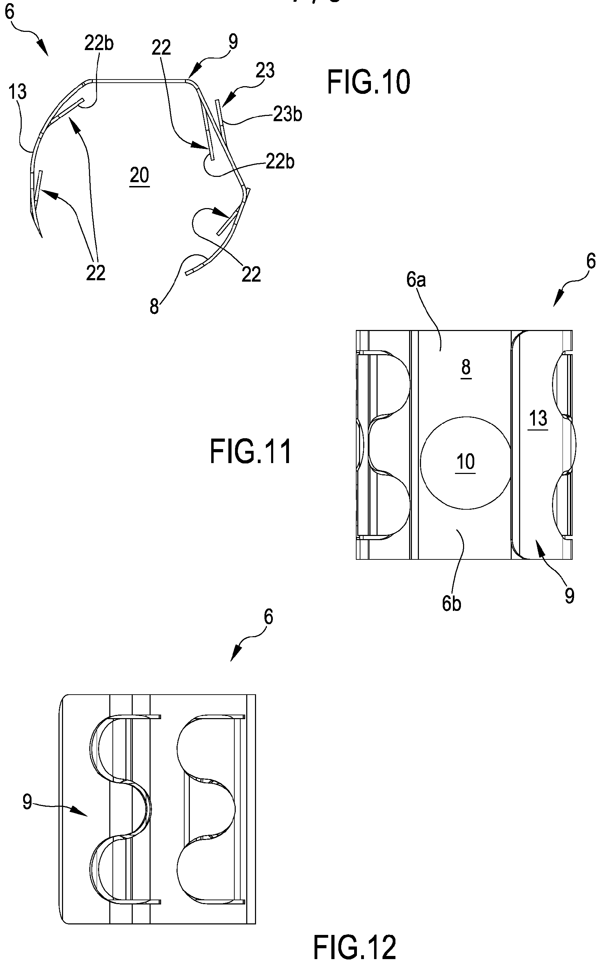

The inner lateral surface 8 of the diverter 6 defines, according to a cross-section normal to the development direction D of the diverter 6 itself, an irregular perimetral outline, particularly an asymmetric one; to this end see for example Figure 10. According to said cross-section normal to the development direction D of the diverter 6, the inner lateral surface 8 of the diverter 6 defines an open outline, particularly a substantially "C" shaped one. In the embodiment illustrated in the accompanying figures, the diverter 6 exhibits a substantially "C" outline; however, further embodiments wherein the open outline of the diverter 6 exhibits a different shape, for example a "U" shape or also a closed or substantially closed configuration, are not excluded. The opening of the outline of the diverter 6 is defined by a through groove (interposed between the edges 21 - Figure 9) which extends from the first to the second longitudinal ends 6a, 6b along all the longitudinal development of the diverter 6; to this end, see Figures 8 and 9 for example.

The accompanying figures show an embodiment of the diverter 6 the shape thereof, along a cross-section normal to the direction D, is defined by two arc-shape end segments inbetween two rectilinear segments are present. Such shape is illustrated in figure 10 for example; following the shape from a perimetral end to the other end it is possible to identify a first curvilinear segment directly connected to a first rectilinear segment. Further, the first rectilinear segment is directly connected to a second rectilinear segment: the first rectilinear segment is interposed between the first curvilinear segment and second curvilinear segment. As it is visible in Figure 10, the first and second rectilinear segments are sloped one with respect to the other by an angle greater than 90°, particularly comprised between 95° and 140°. The angle is measured inside the seat 20 of the diverter 6 between the inner lateral surface 8 of the first rectilinear segment and the inner lateral surface 8 of the second rectilinear segment. The shape of the diverter 6, as illustrated in Figure 10, further comprises a second curvilinear segment directly connected to the second rectilinear segment so that this latter is interposed between the first rectilinear segment and second curvilinear segment. Generally, the perimetral shape of the diverter 6 defines a substantially "C" open outline.

The end curvilinear segments of the outline are substantially countershaped to the inner lateral surface 12 of the containing body 2; the curvilinear segments are configured for contacting, at least for the most part of their extension, the inner lateral surface 12 of the body 2.

The open outline diverter 6 is advantageously, but in a non limiting way, defined by a plate laminar body, which precisely defines an arc shape. The laminar body structure of the diverter 6, with the presence of the groove 21 in order to form an open perimetral outline of the same, enables to define a diverter 6 configured for elastically warping at least along a radial direction and particularly normal to the direction D: the diverter is configured for elastically warping and changing its transversal size measured normal to the development direction D of the diverter 6 itself. The typical elasticity of the diverter 6 enables the same to warp during the step of inserting it in the containing body and then upon releasing it, to adapt to the inner lateral surface 12; the elasticity of the diverter 6 enables to lock the same inside the containing body 2.

As it is visible in the attached figures, the lateral wall 9 of the diverter 6 exhibits a through opening 10 opposite to the groove 21 and configured for enabling a direct fluid communication between the seat 20 of the diverter and the inlet 4; de facto, the opening 10 is destined to enable the fluid to enter the diverter 6. De facto, the opening 10 is disposed on the first rectilinear segment of the diverter 6 as illustrated in Figure 7, for example. The opening 10 crosses the lateral wall 9 of the diverter and exhibits, in a non limiting way, a circular outline. However, it is not excluded the possibility of defining a through opening exhibiting a different shape, for example an elliptical, substantially semicircular, square or rectangular, polygonal.

The through opening 10 is substantially defined at a longitudinal midline of the diverter 6 between the first and second longitudinal ends 6a, 6b.

Moreover, as it is visible in Figure 5 for example, the diverter 6 is engaged inside the containing body 2 at the first end portion 2a so that the through opening 10 of the diverter 6 faces the access 29 of the body 2. De facto, the first end 6a of the diverter faces the first end portion 2a of the body 2, while the second end 6b of the diverter 6 faces the second end portion 6b of the body 2.

De facto, the through opening 10 directly fluidically communicates with the inlet 4; if the containing body 2 exhibits the distributing head 30, the through opening 10 engagingly receives the conduits 32 defining at least part of the inlet 4. Particularly, the second end portion 32b of the conduit 32 is countershaped to the opening 10 and is directly inserted inside the same; in this way, the conduit 32 is engaged with the diverter 6 and promotes a stable engagement of the same inside the containing body 2.

The diverter 6 comprises a predetermined number of flow diverting elements 22, 23 emerging from the lateral wall 9 itself and configured for intercepting at least part of the fluid flow entering the separator 1 (see Figures from 7 to 10).

The flow diverting element comprises at least one, particularly a plurality of main elements 22, each of them comprises an attachment portion 22a directly engaged with the inner lateral surface 8 of the diverter 6 and extending along an arc-shaped trajectory entering towards the seat 20 of the diverter 6. Moreover, each main element 22 comprises a projecting portion 22b continuously extending from the attached portion 22a towards a direction entering the seat 20. Preferably, the projecting portion 22b extends along a rectilinear direction from the attachment portion 22a to an end which exhibits a minimum distance from the inner lateral surface 8 of the diverter 6 greater than 1.5 mm. Each main element 22 is made in one-piece with the diverter 6.

Preferably but in a non limiting way, the main element 22 comprises a laminar body defining a tab. As illustrated in the accompanying figures, the tab exhibits a substantially "C" outline; however, other embodiments wherein the tab exhibits a substantially "U" or "ω" outline are not excluded. As it will be more specifically described in the following about the embodiment process which will be detailed, the tab is formed by notching the flat laminar body and then folding a notched portion. Particularly, folding the notched portion forms the tab and defines, on the lateral wall 9 of the diverter 6, an opening 35 (see Figures from 7 to 9). The opening 35 crosses the lateral wall 9 of the diverter 6 defined rearwardly the tab between the tab itself and an outline of the notch.

The accompanying figures illustrate a configuration wherein the diverter 6 comprises a plurality of main elements 22 which can be in a number equal to or greater than 2, or more.

The main elements 22 emerge from a same side of the lateral wall 9 of the diverter 6 and are substantially disposed uniformly along the perimeter of this latter. As illustrated in the accompanying figures, the main elements 22 develop on each segment of the lateral wall 9 with the exception of the first rectilinear segment of the lateral wall having the through opening 10, in other words on the wall at which the fluid is destined to enter inside the diverter 6.

The accompanying figures illustrate, in a non limiting way, a configuration of the diverter 6 comprising two series of main elements 22 perimetrally emerging from the inner lateral surface 8 of the diverter 6. Each series comprises a plurality of main elements 22 substantially disposed at a same height along a development direction D of the diverter 6. The two series of main elements 22 develop at different heights of the diverter 6 and are equidistantly spaced along the development direction D of the diverter 6. The main elements 22 disposed at the same height along the development direction D of the diverter 6 can be uniformly disposed, particularly are equidistantly spaced along the perimeter of the diverter 6.

The main elements 22 are shaped in order to intercept the fluid entering the diverter 6 and define a cyclone trend of the fluid itself inside the seat 20 of the diverter 6. The cyclone trend of the fluid enables to better collect towards the bottom the solid particles suspended in the fluid, which then will fall on the bottom portion 24 of the containing body 2.

Moreover, the diverter 6 can comprise, in a non limiting way, at least one auxiliary element 23 emerging from an outer lateral surface 13 of the lateral wall 9 of the diverter 6 along a direction exiting the seat 20 of the diverter 6 itself.

Each auxiliary element 23 comprises an attachment portion 23a directly engaged with the outer lateral surface 13 of the diverter 6 and extending along an arc-shaped trajectory exiting the seat 20. Further, each auxiliary element 23 comprises a projecting portion 23b continuously extending from the attachment portion 23a towards a direction exiting the seat 20. The projecting portion 23b of the auxiliary element extends along a rectilinear direction from the attachment portion 23a to an end which exhibits a minimum distance from the outer lateral surface 13 of the diverter 6, greater than 1.5 mm. The auxiliary element 23 is made in one piece with the diverter 6.

The diverter 6 can comprise a single auxiliary element 23 (see Figure 7, for example) or a plurality of auxiliary elements 23 emerging from the outer lateral surface 13 of the diverter 6. According to this latter embodiment (not illustrated in the accompanying figures), the auxiliary elements 23 can be in a number equal to or greater than 2, or more. The auxiliary elements 23 perimetrally emerge from the outer lateral surface 13 of the diverter 6 and are substantially disposed at a same height along a development direction D of the diverter 6. Specifically, the plurality of auxiliary elements 23 disposed at the same height, are interposed, along the development direction D of the diverter 6, between two consecutive series of main elements 22. In the same way, in the embodiment wherein the diverter 6 comprises a single auxiliary element 23, it can be disposed between two main elements 22 (see Figure 7).

Each auxiliary element 23 comprises a laminar body defining a tab. As illustrated in the accompanying figures, the tab exhibits a substantially "C" outline; however, further embodiments wherein the tab exhibits a substantially "U" or "ω" outline are not excluded. As it will be more specifically seen in the embodiment process which will be described in the following, the tab is formed by notching the flat laminar body and then folding a notched portion. Particularly, folding the notched portion forms the tab and defines, on the lateral wall 9 of the diverter 6, an opening 36 (see Figures from 7 to 8) . The opening 36 crosses the lateral wall 9 of the diverter 6 defined rearwardly the tab between the tab itself and an outline of the notch.

As hereinbefore briefly discussed, the diverter 6 is placed inside the containing body 2 between the inlet 4 and outlet 5 along the fluid advancement direction inside the containing body 2. The diverter 6 is disposed at the first end portion 2a of the containing body 2 and particularly faces the access 29.

The diverter 6 defines cooperatively with the containing body 2, a first and second chambers 7, 11 which are both placed inside the housing compartment 3. The first chamber 7 is defined inside the diverter 6 and is delimited by the inner lateral surface 8 of the lateral wall 9 of the diverter 6 (the first chamber 7 substantially coincides with the seat 20). The first chamber 7 directly fluidically communicates with the second chamber 11, which is defined downstream the first chamber 7 along the fluid advancement direction inside the containing body 2. De facto, the second chamber 11 is defined below, and outside, the first chamber 7 and particularly at the second end portion 2b of the containing body 2.

As illustrated in Figure 5, the second chamber 11 is delimited at least partially by the inner lateral surface 12 of the containing body 2 and extends outside the diverter 6. The second chamber 11 is, on one side, in direct fluid communication with the first chamber 7 and, on the other side, is in direct fluid communication with the outlet 5. According to the embodiment illustrated in the accompanying figures, the second chamber 11 comprises a first compartment 11a and a second compartment 11b. The first compartment 11a is delimited by the inner lateral surface 12 of the containing body 2 and is disposed downstream the first chamber 7 along the fluid advancement path (see Figure 5). In other words, the first compartment 11a is interposed between the first chamber 7 and second compartment 11b and is immediately consecutive to the first chamber 7. The first compartment 11a is defined below the first chamber 7 and at the second end portion 2b of the containing body 2.

With reference to the second compartment 11b, it is defined between the inner lateral surface 12 of the containing body 2 and the outer lateral surface 14 of the lateral wall 9 of the diverter 6. The second compartment 11b is disposed downstream the first compartment 11a along the fluid advancement path. In other words, the second compartment 11b is interposed between the first compartment 11a and the outlet 5 and is immediately consecutive to the first compartment 11a.

The direct fluid communication between the two chambers 7, 11 can be made possible also by the lateral passages 35, 36 (notches at which the main 22 and auxiliary elements 23 are defined) of the diverter 6, which are for example made in the lateral wall 9 of the diverter 6 and are configured for putting in communication the first chamber 7 with the second compartment 11b of the second chamber 11.

For the sake of completeness, the flow trend inside the separator 1 will be now schematically described. Under operative conditions of the separator 1, the fluid enters the containing body 2 through the conduit 32 of the inlet 4 and is conveyed in the first chamber 7 (inside the diverter 6) wherein the main elements 22 of the diverter 6 intercept and deflect the flow for generating a cyclone trend. Therefore, the flow advances, by passing along the containing body 2 from the first to the second end portions 2a, 2b of the first chamber 7 to the first compartment 11a of the second chamber 11, then goes up along the containing body 2 by passing through the second compartment 11b of the second chamber 11. The ascending fluid mainly flows between the diverter 6 and containing body 2 in the rectilinear segments of the diverter itself; particularly, as it is visible in Figure 6 for example, the rectilinear segments of the diverter 6 exhibit portions spaced from the inner surface 12 of the containing body: these portions define passage openings of the ascending fluid which flows from the first to the second compartment. In this configuration, the ascending fluid mainly flows from the rectilinear segments of the diverter. Now, the fluid is discharged from the separator 1 through the conduit 33 of the outlet 5.

Moreover, the separator 1 comprises a magnetic device 14 removably engaged with the containing body 2 and configured for attracting to it ferrous particles present in the fluid. According to the embodiment shown in the attached figures, the magnetic device 14 exhibits an elongated shape having a substantially cylindrical shape; however, further alternative shapes are not excluded. The magnetic device 14 is disposed inside the housing compartment 3 and projects above the same (see Figure 1). Inside the housing compartment 3, the magnetic device 14 develops particularly in the first chamber 7 (concentrically also with the first compartment 11a of the second chamber - see Figure 5). The magnetic device 14 is disposed inside the diverter 6 and is coaxial with the diverter 6 and containing body 2. The magnetic device 14 comprises at least one closed volume hollow casing 15 receiving at least one magnet 16 which generates a magnetic field such to attract and retain the ferrous magnetic particles against the casing 15. As illustrated in Figure 5, the casing 15 is interposed between the magnet 16 and diverter 6. The magnet 16 is the element of the magnetic device 14 configured for attracting, under operative conditions of the separator 1, the ferrous particles suspended in the fluid flow circulating inside the separator 1. The ferrous particles will fall on an outer surface of the casing 15 by means of the magnetic attraction exerted on them by the magnet 16. The magnet 16 is removably housed inside the casing 15 so that it can be removed from the casing 15 itself. During the step of cleaning the separator, removing the magnet 16 enables the ferrous particles to fall by gravity and collect on the bottom portion 24 of the containing body 2. Therefore, the ferrous particles can be removed from the separator 1 by means of the discharge tap 26.

Moreover, the magnetic device 14 comprises an engagement portion 19 configured for cooperating with the engagement portion 18 of the containing body 2 for reversibly constraining the magnetic device 14 to the separator 1. The accompanying figures represent an embodiment of the magnetic device 14 (engagement portion 19) having an outer thread; it is not excluded the possibility of making an engagement portion 19 comprising an inner thread, a quick-coupling engagement portion or a bayonet portion, or a similar fixed, adjustable or removable engagement.

### Embodiment process

Moreover, it is an object of the present invention a process for making a solid particles separator 1 according to the above given description and/or according to one or more of the accompanying claims. In a preliminary step, the process provides the arrangement of the containing body 2, fluid inlet 4 and outlet 5 and the diverter 6.

Referring particularly to Figures from 13 to 15, a process for making the diverter 6 will be described in the following.

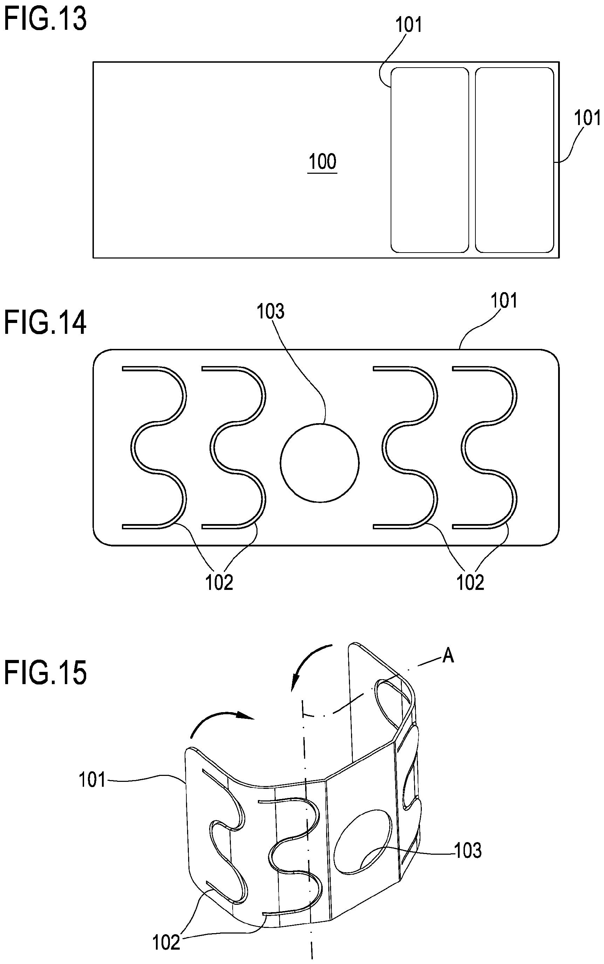

The same is made from a flat sheet 100, preliminarily unwound from a coil for example, and then is flattened. Preferably, the flat sheet 100 is of a metal material; however, embodiments wherein the flat sheet is of a non metal material, for example of a plastic material, are not excluded. The flat sheet 100 is notched or die-cut for defining the outer side of the flat laminar body 101 of the separator and a predetermined number of open outlines 102 crossing the body (see Figure 14). Moreover, the die-cutting step provides to make, substantially at the midline of the flat laminar body 101, a through notch having a closed outline 103, adapted to define the through opening 10 of the diverter 6.

The above described operations could be performed in-line on the unwinding strip 100 in order to define, at each die-cutting operation, a plurality of flat bodies 101 exhibiting the cited open outlines 102 and the central hole 103. Obviously it is not excluded the possibility of performing the different notching operations in consecutive times, and not simultaneously, and also of making a single flat laminar body 101 die-cut at each die-cutting operation.

Then, it is performed the step of folding the flat laminar body 101 around a longitudinal development axis A so that the flat laminar body 101 can define a substantially arc-shape open outline around the longitudinal axis A (see Figure 15). Simultaneously with (or before or after) the step of folding the flat laminar body 101 around the longitudinal development axis A, the process further comprises a step of folding the open outlines 102 for defining the flow diverting elements 22, 23 emerging from the lateral wall 9 of the diverter 6. Such folding step is performed both according to a direction entering the arc-shaped outline of the diverter 6 in order to define a plurality of main elements 22 emerging from the inner lateral surface of the diverter 6, and along a direction exiting the arc-shaped outline of the diverter 6 for defining at least one auxiliary element 23 emerging from the outer lateral surface of the diverter 6.

At this point, the diverter 6 is inserted and removably engaged inside the housing compartment 3 of the containing body 2 between the inlet 4 and outlet 5 in order to form the first and second chambers 7, 11. The diverter 6 is radially and elastically warped for being inserted inside the containing body 2 through the opening of the containing body 2, positioned at the second end portion 2b. Therefore, the diverter 6 is positioned at the first end portion 2a of the containing body 2. The stable and reversible engagement of the diverter 6 inside the housing compartment 3 of the containing body 2 is allowed by the spring-back of the diverter 6. Figures 5 and 6 illustrate the configuration wherein the diverter 6 is engaged inside the containing body 2.

After positioning the diverter 6, the bottom portion 24 is engaged with the containing body 2 for closing this latter. Then, the discharge tap 26 is engaged at the auxiliary outlet 34 of the bottom portion 24.

Further, the process comprises a step of engaging the magnetic device 14 at least inside the containing body 2. The magnetic device 14 is inserted inside the containing body 2 through the opening 17.

The process also comprises providing and engaging the distributing head 30. The distributing head 30 is engaged into the access 29 of the containing body 2 so that the central conduit 32 directly communicates with the inlet 4 and therefore with the first chamber 7 defined by the diverter 6, while the annularly outer conduit 33 directly communicates with the second chamber 11 of the housing compartment 3.

### Method for separating solid particles from a fluid

Moreover, it is an object of the present invention a method of separating solid particles from a fluid, particularly by a separator 1 according to one or more of the accompanying claims.

The method provides to introduce a fluid into the separator 3 through the inlet 4. The fluid is introduced into the first chamber 7 along a direction substantially intercepting a longitudinal development axis of the diverter 6 and is destined to consecutively pass through the first chamber 7, second chamber 11, and outlet 5. The introduced fluid flow defines, in contact with the main elements 22 of the diverter 6, a cyclone trend adapted to enable to deposit the solid particles contained in the fluid entering into a bottom portion 24 of the containing body 2. The cyclone trend of the fluid is defined at least inside the first chamber 7 and can also occur inside the first compartment 11a of the second chamber 11. The ferrous particles suspended in the fluid, build up on the outer surface of the casing 15 of the magnet device 14 and, after removing the magnet 16, deposit on the bottom portion 24. Therefore, the fluid is caused to flow through the second chamber 11 and then is ejected from the separator 1 through the outlet 5. Further, the method can provide to remove the solid particles built up on the bottom portion 24 of the containing body 2 by the discharge tap 26.

### ADVANTAGES OF THE INVENTION

The present invention enables to solve the limitations and disadvantages described about the prior art and enables to obtain noteworthy advantages.

The separator, according to the present invention, is capable of effectively separating from a fluid, particularly a liquid, the ferrous and non-ferrous particles. The separator, according to the invention, further exhibits a simple and compact structure adapted to ensure an efficient separation of the solid particles from a fluid. Such structure is obtainable with simple steps of the manufacturing process which can be easily implementable.

The separation is particularly efficient thanks to the presence of the flow diverting elements 22, 23 configured for generating a cyclone trend of the fluid flow and to the possibility of the fluid to directly flow from the first to the second chamber by passing through the lateral wall of the separator.

## Claims

1. Solid particles-fluids separator (1) comprising:
- a containing body (2) defining a housing compartment (3),
- at least one fluid inlet (4),
- at least one fluid outlet (5),
- a diverter (6) engaged inside the housing compartment (3) and operatively interposed between the inlet (4) and outlet (5),
**characterized in that** the diverter (6) comprises a laminar body defining an arc shape and extending longitudinally along a predetermined development direction (D) or axis between a first and second longitudinal ends (6a, 6b),
wherein the housing compartment (3) comprises:
- a first chamber (7) delimited by an inner lateral surface (8) of a lateral wall (9) of the diverter (6), and
- a second chamber (11) delimited at least partially by an inner lateral surface (12) of the containing body (2) and extending at least partially outside the diverter (6), the first and second chambers (7, 11) being directly fluidically communicating with each other;
wherein the inlet (4) is directly fluidically communicating with said first chamber (7), the outlet (5) being directly fluidically communicating with said second chamber (11) and
wherein the lateral wall (9) of the diverter (6) comprises a predetermined number of flow diverting elements (22, 23) emerging from the lateral wall (9) itself and configured for intercepting and diverting at least a part of the fluid flow entering the separator (1),
wherein the second chamber (11) comprises a first compartment (11a) axially and immediately consecutive to the first chamber (7), the first compartment (11a) being delimited by the inner lateral surface (12) of the containing body (2),
the second chamber (11) further comprising a second compartment (11b) directly interposed between the first compartment (11a) and the outlet (5) of the separator (1), the second compartment (11b) being defined between the inner lateral surface (12) of the containing body (2) and an outer lateral surface (13) of the lateral wall (9) of the diverter (6), the first chamber (7) directly fluidically communicates with the inlet (4), the second chamber (11) being directly communicating, on one side, with the first chamber (7) and, on the other side, with the outlet (5),
the first chamber (7) is directly interposed between the inlet (4) and second chamber (11), the second chamber (11) being directly interposed between the first chamber (7) and outlet (5) .

2. Separator according to the preceding claim, wherein the diverter (6) comprises a body extending along a predetermined development direction (D), and wherein the separator (1) comprises a plurality of flow diverting elements (22, 23) protruding perimetrally from the lateral wall (9) of the diverter substantially at a same height of the diverter (6) along the development direction (D) according to a direction entering the first chamber (7).

3. Separator according to the preceding claim, comprising at least two series of main elements (22) protruding perimetrally from the inner lateral surface (8) of the diverter (6), each series comprising a plurality of main elements (22) substantially placed at a same height along a development direction (D) of the diverter (6), the two series being spaced from each other along said development direction (D) of the diverter (6), the main element (22) comprising an attachment portion (22a) directly engaged with the inner lateral surface (8) of the diverter (6), and extending along an arc-shape trajectory entering towards the first chamber (7) of the housing compartment (3),
the main element (22) comprising a projecting portion (22b) extending, continuously, from the attachment portion (22a) towards a direction entering the first chamber (7) of the housing compartment (3), the projecting portion (22b) extending along a straight direction.

4. Separator according to claim 3, wherein the main element (22) of the flow diverting element comprises a laminar body defining a tab, the tab defining on the lateral wall of the diverter (6) an opening (35) passing through the lateral wall (9) of the diverter (6), defined rearwardly the tab between the tab itself and an outline of a notch on the lateral wall and wherein the tab of the main element (22) exhibits a substantially "C" or "U" or "ω" outline.

5. Separator according to anyone of the preceding claims, wherein the flow diverting element comprises at least one auxiliary element (23) protruding from an outer lateral surface (13) of the lateral wall (9) of the diverter (6) according to a direction exiting the first chamber (7), the plurality of auxiliary elements (23) being interposed, along the development direction (D) of the diverter (6), between two consecutive series of main elements (22).

6. Separator according to anyone of the preceding claims, wherein the diverter (6) is a one-piece laminar body and is made by folding a flat laminar body.

7. Separator according to anyone of the preceding claims, wherein the diverter (6) comprises a body extending along a predetermined development direction (D), the diverter (6) comprises a through seat (20) extending along the development direction (D) of the diverter (6) itself, delimited by the inner lateral surface (8) and defining at least partially said first chamber (7), the first and second chambers (7, 11) communicating through said through seat (20), the inner lateral surface (8) of the diverter (6) defining, according to a cross-section normal to the development direction (D) of the diverter (6) itself, an irregular perimetral outline and wherein the inner lateral surface (8) of the diverter (6) defines, according to a cross-section normal to the development direction (D) of the diverter (6) itself, an open outline.

8. Separator according to anyone of the preceding claims, wherein the diverter (6) comprises a lateral passage configured for directly fluidically communicating the first and second chambers (7, 11), the diverter (6) comprises a groove (21) crossing the lateral wall (9) and extending from the first to the second longitudinal ends (6a, 6b) all along the longitudinal development of the diverter (6).

9. Separator according to anyone of the preceding claims, wherein the first chamber (7) is directly fluidically communicating with the inlet (4) through at least one through opening (10) placed at the lateral wall (9) of the diverter (6), the second chamber (11) directly communicating with the outlet (5), the through groove (21) of the diverter (6) is opposite the through opening (10) of the lateral wall (9) of the diverter (6) directly communicating with the inlet (4).

10. Separator according to anyone of the preceding claims, wherein the first compartment (11a) is only delimited by an inner lateral surface (12) of the containing body (2) and wherein the second compartment (11b) is only defined between the inner lateral surface (12) of the containing body (2) and an outer lateral surface (13) of the lateral wall (9) of the diverter (6).

11. Separator according to anyone of the preceding claims, wherein the first compartment (11a) of the second chamber (11) directly fluidically communicates with the first chamber (7), while the second compartment (11b) of the second chamber (11) directly fluidically communicates with the outlet (5).

12. Separator according to anyone of the preceding claims, comprising at least one magnetic device (14) engaged with the containing body (2) and configured for attracting ferrous particles present in the fluid, the magnetic device (14) being placed in the housing compartment (3) and/or being engaged outside the containing body (2).

13. Separator according to claim 12, wherein the magnetic device (14) exhibits an elongated shape, extending all along the first chamber (7) and at least partially inside the first compartment (11a) of the second chamber (11), and wherein the magnetic device (14) comprises at least one casing (15) having a closed volume receiving inside at least one magnet (16), the casing (15) is interposed between the magnet (16) and diverter (6),
the containing body (2) comprises a through opening (17), distinct and separated from the inlet (4) and outlet (5) of the separator (1) itself, configured for enabling to access from the outside into the housing compartment (3), the containing body (2), at said through opening (17) of the same containing body (2), comprises an engagement portion (18),
and wherein the magnetic device (14) is at least partially inserted in the housing compartment (3) via the through opening (17) of the containing body (2), the magnetic device (14) comprising a respective engagement portion (19) configured for cooperating with the engagement portion (18) of the containing body (2) for constraining the magnetic device (14) to the separator (1).

14. Separator according to anyone of the preceding claims, wherein the diverter (6) develops along a longitudinal axis, the outlet (5) comprising a conduit (33) extending along a respective transversal development axis to the longitudinal axis of the diverter (6), the development axis of the conduit (33) of the outlet (5) substantially intersecting the longitudinal axis of the diverter (6), the conduit (33) of the outlet (5) is engaged with a lateral wall of the containing body (2) and is configured for enabling to emit the fluid arriving from the diverter (6) via the containing body (2),
the conduit (33) of the outlet (5) is at least partially coaxial with the conduit (32) of the inlet (4).

15. Separator according to anyone of the preceding claims, wherein the containing body (2) comprises a tubular body extending along a prevalent development direction between a first and second end portions (2a, 2b),
the housing compartment (3) of the containing body (2), at the first end portion (2a), receiving the diverter (6) to define said first chamber (7), the housing compartment (3) of the containing body (2), at the second end portion (2b), defining said second chamber (11),
said first and second chambers (7, 11) being immediately consecutive along the prevalent development direction of the containing body (2),
at the second end portion (2b), the containing body (2) comprises a bottom portion (24) configured for enabling to collect the solid particles entrained by the fluid circulating in the separator (1),
the bottom portion (24) exhibiting a through auxiliary outlet (34) directly fluidically communicating with the second chamber (11), the separator (1) further comprising a discharge tap (26) engaged at the auxiliary outlet (34),
the discharge tap (26) being configured for defining a first operative condition wherein prevents the fluid passage from the same tap, the tap (26), in the first operative condition, being configured for enabling to collect and building up solid particles in the bottom portion (24) of the containing body (2),
the discharge tap (26) being further configured for defining a second operative condition wherein enables the fluid passage from the same tap, the tap (26), in the second operative condition, being configured for enabling to discharge the fluid and solid particles built up on the bottom portion (24) of the containing body (2).

## Patentansprüche

1. Festkörperpartikel-Fluid-Separator (1), umfassend:
- einen Behälterkörper (2), welcher einen Aufnahmeraum (3) definiert,
- wenigstens einen Fluideinlass (4),
- wenigstens einen Fluidauslass (5),
- eine Umlenkeinrichtung (6), welche innerhalb des Aufnahmeraums (3) in Eingriff gebracht ist und betriebsmäßig zwischen dem Einlass (4) und dem Auslass (5) eingefügt ist,
**dadurch gekennzeichnet, dass** die Umlenkeinrichtung (6) einen laminaren Körper umfasst, welcher eine Bogenform definiert und sich longitudinal entlang einer vorbestimmten Verlaufsrichtung (D) oder -Achse zwischen einem ersten und einem zweiten longitudinalen Ende (6a, 6b) erstreckt,
wobei der Aufnahmeraum (3) umfasst:
- eine erste Kammer (7), welche durch eine innere laterale Fläche (8) einer lateralen Wand (9) der Umlenkeinrichtung (6) begrenzt ist, und
- eine zweite Kammer (11), welche wenigstens teilweise durch eine innere laterale Fläche (12) des Behälterkörpers (2) begrenzt ist und sich wenigstens teilweise außerhalb der Umlenkeinrichtung (6) erstreckt, wobei die erste und die zweite Kammer (7, 11) in unmittelbarer Fluidverbindung miteinander stehen;
wobei der Einlass (4) in unmittelbarer Fluidverbindung mit der ersten Kammer (7) steht, der Auslass (5) in unmittelbarer Fluidverbindung mit der zweiten Kammer (11) steht und wobei die laterale Wand (9) der Umlenkeinrichtung (6) eine vorbestimmte Anzahl von Strömungsumlenkelementen (22, 23) umfasst, welche von der lateralen Wand (9) selbst hervortreten und dazu eingerichtet sind, wenigstens einen Teil der Fluidströmung, welche in den Separator (1) eintritt, zu unterbrechen und umzulenken,
wobei die zweite Kammer (11) einen ersten Raum (11a) umfasst, welcher axial und unmittelbar auf die erste Kammer (7) folgt, wobei der erste Raum (11a) durch die innere laterale Fläche (12) des Behälterkörpers (2) begrenzt ist,
wobei die zweite Kammer (11) ferner einen zweiten Raum (11b) umfasst, welcher unmittelbar zwischen dem ersten Raum (11a) und dem Auslass (5) des Separators (1) eingefügt ist, wobei der zweite Raum (11b) zwischen der inneren lateralen Fläche (12) des Behälterkörpers (2) und einer äußeren lateralen Fläche (13) der lateralen Wand (9) der Umlenkeinrichtung (6) definiert ist, wobei die erste Kammer (7) mit dem Einlass (4) in unmittelbarer Fluidverbindung steht, wobei die zweite Kammer (11), an einer Seite, mit der ersten Kammer (7), und, an der anderen Seite, mit dem Auslass (5) in unmittelbarer Verbindung steht, wobei die erste Kammer (7) unmittelbar zwischen dem Einlass (4) und der zweiten Kammer (11) eingefügt ist, wobei die zweite Kammer (11) unmittelbar zwischen der ersten Kammer (7) und dem Auslass (5) eingefügt ist.

2. Separator nach dem vorhergehenden Anspruch, wobei die Umlenkeinrichtung (6) einen Körper umfasst, welcher sich entlang einer vorbestimmten Verlaufsrichtung (D) erstreckt, und wobei der Separator (1) eine Mehrzahl von Strömungsumlenkelementen (22, 23) umfasst, welche umfangsmäßig von der lateralen Wand (9) der Umlenkeinrichtung im Wesentlichen bei einer gleichen Höhe der Umlenkeinrichtung (6) entlang der Verlaufsrichtung (D) entsprechend einer Richtung vorstehen, welche in die erste Kammer (7) eintritt.

3. Separator nach dem vorhergehenden Anspruch, umfassend wenigstens zwei Reihen von Hauptelementen (22), welche umfangsmäßig von der inneren lateralen Fläche (8) der Umlenkeinrichtung (6) vorstehen, wobei jede Reihe eine Mehrzahl von Hauptelementen (22) umfasst, welche im Wesentlichen bei einer gleichen Höhe entlang einer Verlaufsrichtung (D) der Umlenkeinrichtung (6) platziert sind, wobei die beiden Reihen entlang der Verlaufsrichtung (D) der Umlenkeinrichtung (6) voneinander beabstandet sind, wobei das Hauptelement (22) einen Anbringungsabschnitt (22a) umfasst, welcher unmittelbar mit der inneren lateralen Fläche (8) der Umlenkeinrichtung (6) in Eingriff gebracht ist und sich entlang einer bogenförmigen Trajektorie erstreckt, welche in Richtung der ersten Kammer (7) des Aufnahmeraums (3) eintritt,
wobei das Hauptelement (22) einen Vorsprungsabschnitt (22b) umfasst, welcher sich kontinuierlich von dem Anbringungsabschnitt (22a) in Richtung einer Richtung erstreckt, welche in die erste Kammer (7) des Aufnahmeraums (3) eintritt, wobei sich der Vorsprungsabschnitt (22b) entlang einer geraden Richtung erstreckt.

4. Separator nach Anspruch 3, wobei das Hauptelement (22) des Strömungsumlenkelements einen laminaren Körper umfasst, welcher eine Lasche definiert, wobei die Lasche an der lateralen Wand der Umlenkeinrichtung (6) eine Öffnung (35) definiert, welche durch die laterale Wand (9) der Umlenkeinrichtung (6) hindurchtritt, und hinter der Lasche zwischen der Lasche selbst und einer Kontur einer Aussparung an der lateralen Wand definiert ist, und wobei die Lasche des Hauptelements (22) eine im Wesentlichen "C"- oder "U"- oder "⊐"-förmigen Kontur aufweist.

5. Separator nach einem der vorhergehenden Ansprüche, wobei das Strömungsumlenkelement wenigstens ein Hilfselement (23) umfasst, welches von einer äußeren lateralen Fläche (13) der lateralen Wand (9) der Umlenkeinrichtung (6) gemäß einer Richtung vorsteht, welche aus der ersten Kammer (7) austritt, wobei die Mehrzahl von Hilfselementen (23) entlang der Verlaufsrichtung (D) der Umlenkeinrichtung (6) zwischen zwei aufeinanderfolgenden Reihen von Hauptelementen (22) eingefügt sind.

6. Separator nach einem der vorhergehenden Ansprüche, wobei die Umlenkeinrichtung (6) ein einstückiger laminarer Körper ist, und durch Falten eines ebenen laminaren Körpers hergestellt ist.

7. Separator nach einem der vorhergehenden Ansprüche, wobei die Umlenkeinrichtung (6) einen Körper umfasst, welcher sich entlang einer vorbestimmten Verlaufsrichtung (D) erstreckt, wobei die Umlenkeinrichtung (6) einen Durchgangssitz (20) umfasst, welcher sich entlang der Verlaufsrichtung (D) der Umlenkeinrichtung (6) selbst erstreckt, durch die innere laterale Fläche (8) begrenzt ist und wenigstens teilweise die erste Kammer (7) definiert, wobei die erste und die zweite Kammer (7, 11) über den Durchgangssitz (20) in Verbindung stehen, wobei die innere laterale Fläche (8) der Umlenkeinrichtung (6), gemäß einem zu der Verlaufsrichtung (D) der Umlenkeinrichtung (6) selbst normalen Querschnitt, eine unregelmäßige Umfangskontur definiert und wobei die innere laterale Fläche (8) der Umlenkeinrichtung (6), gemäß einem zu der Verlaufsrichtung (D) der Umlenkeinrichtung (6) selbst normalen Querschnitt, eine offene Kontur definiert.

8. Separator nach einem der vorhergehenden Ansprüche, wobei die Umlenkeinrichtung (6) einen lateralen Durchgang umfasst, welcher dazu eingerichtet ist, die erste und die zweite Kammer (7, 11) in unmittelbare Fluidverbindung zu versetzen, wobei die Umlenkeinrichtung (6) eine Nut (21) umfasst, welche die laterale Wand (9) kreuzt und sich entlang des gesamten longitudinalen Verlaufs der Umlenkeinrichtung (6) von dem ersten zu dem zweiten longitudinalen Ende (6a, 6b) erstreckt.

9. Separator nach einem der vorhergehenden Ansprüche, wobei die erste Kammer (7) über wenigstens eine Durchgangsöffnung (10), welche an der lateralen Wand (9) der Umlenkeinrichtung (6) platziert ist, mit dem Einlass (4) in unmittelbarer Fluidverbindung steht, die zweite Kammer (11) mit dem Auslass (5) in unmittelbarer Verbindung steht, wobei die Durchgangsnut (21) der Umlenkeinrichtung (6) der Durchgangsöffnung (10) der lateralen Wand (9) der Umlenkeinrichtung (6) entgegengesetzt ist, mit dem Einlass (4) unmittelbar in Verbindung stehend.

10. Separator nach einem der vorhergehenden Ansprüche, wobei der erste Raum (11a) nur durch eine innere laterale Fläche (12) des Behälterkörpers (2) begrenzt ist und wobei der zweite Raum (11b) nur zwischen der inneren lateralen Fläche (12) des Behälterkörpers (2) und einer äußeren lateralen Fläche (13) der lateralen Wand (9) der Umlenkeinrichtung (6) definiert ist.

11. Separator nach einem der vorhergehenden Ansprüche, wobei der erste Raum (11a) der zweiten Kammer (11) mit der ersten Kammer (7) in unmittelbarer Fluidverbindung steht, während der zweite Raum (11b) der zweiten Kammer (11) mit dem Auslass (5) in unmittelbarer Fluidverbindung steht.

12. Separator nach einem der vorhergehenden Ansprüche, umfassend wenigstens eine Magnetvorrichtung (14), welche mit dem Behälterkörper (2) in Eingriff gebracht ist und dazu eingerichtet ist, in dem Fluid vorhandene eisenhaltige Partikel anzuziehen, wobei die Magnetvorrichtung (14) in dem Aufnahmeraum (3) platziert ist und/oder außerhalb des Behälterkörpers (2) in Eingriff gebracht ist.

13. Separator nach Anspruch 12, wobei die Magnetvorrichtung (14) eine längliche Form aufweist, welche sich entlang der gesamten ersten Kammer (7) und wenigstens teilweise innerhalb des ersten Raums (11a) der zweiten Kammer (11) erstreckt, und wobei die Magnetvorrichtung (14) wenigstens ein Gehäuse (15) umfasst, welches ein geschlossenes Volumen aufweist, welches darin wenigstens einen Magneten (16) aufnimmt, wobei das Gehäuse (15) zwischen dem Magneten (16) und der Umlenkeinrichtung (6) eingefügt ist,
wobei der Behälterkörper (2) eine Durchgangsöffnung (17) umfasst, welche verschieden und separat von dem Einlass (4) und dem Auslass (5) des Separators (1) selbst ist und dazu eingerichtet ist, einen Zugriff von dem Äußeren in den Aufnahmeraum (3) zu ermöglichen, wobei der Behälterkörper (2) an der Durchgangsöffnung (17) des gleichen Behälterkörpers (2) einen Eingriffsabschnitt (18) umfasst,
und wobei die Magnetvorrichtung (14) über die Durchgangsöffnung (17) des Behälterkörpers (2) wenigstens teilweise in den Aufnahmeraum (3) eingesetzt ist,
wobei die Magnetvorrichtung (14) einen entsprechenden Eingriffsabschnitt (19) umfasst, welcher dazu eingerichtet ist, mit dem Eingriffsabschnitt (18) des Behälterkörpers (2) zusammenzuwirken, um die Magnetvorrichtung (14) mit dem Separator (1) in Zwangsverbindung zu bringen.

14. Separator nach einem der vorhergehenden Ansprüche, wobei die Umlenkeinrichtung (6) entlang einer longitudinalen Achse verläuft, wobei der Auslass (5) eine Leitung (33) umfasst, welche sich entlang einer entsprechenden zu der longitudinalen Achse der Umlenkeinrichtung (6) transversalen Verlaufsachse erstreckt, wobei die Verlaufsachse der Leitung (33) des Auslasses (5) die longitudinale Achse der Umlenkeinrichtung (6) im Wesentlichen schneidet,
wobei die Leitung (33) des Auslasses (5) mit einer lateralen Wand des Behälterkörpers (2) in Eingriff gebracht ist und dazu eingerichtet ist, es zu ermöglichen, dass von der Umlenkeinrichtung (6) ankommende Fluid über den Behälterkörper (2) zu emittieren,
wobei die Leitung (33) des Auslasses (5) wenigstens teilweise koaxial zu der Leitung (32) des Einlasses (4) ist.

15. Separator nach einem der vorhergehenden Ansprüche, wobei der Behälterkörper (2) einen rohrförmigen Körper umfasst, welcher sich entlang einer vorherrschenden Verlaufsrichtung zwischen einem ersten und einem zweiten Endabschnitt (2a, 2b) erstreckt, wobei der Aufnahmeraum (3) des Behälterkörpers (2), an dem ersten Endabschnitt (2a), die Umlenkeinrichtung (6) aufnimmt, um die erste Kammer (7) zu definieren, wobei der Aufnahmeraum (3) des Behälterkörpers (2), an dem zweiten Endabschnitt (2b) die zweite Kammer (11) definiert,
wobei die erste und die zweite Kammer (7, 11) entlang der vorherrschenden Verlaufsrichtung des Behälterkörpers (2) unmittelbar aufeinander folgen,
wobei der Behälterkörper (2), an dem zweiten Endabschnitt (2b), einen unteren Abschnitt (24) umfasst, welcher dazu eingerichtet ist, zu ermöglichen, die Festkörperpartikel zu sammeln, welche durch das Fluid mitgeführt werden, welches in dem Separator (1) zirkuliert,
wobei der untere Abschnitt (24) einen Hilfsdurchgangsauslass (34) umfasst, welcher mit der zweiten Kammer (11) in unmittelbarer Fluidverbindung steht,
wobei der Separator (1) ferner eine Abgabelasche (26) umfasst, welche an dem Hilfsauslass (34) in Eingriff gebracht ist,
wobei die Abgabelasche (26) dazu eingerichtet ist, einen ersten Betriebszustand zu definieren, wobei sie den Fluiddurchgang von der gleichen Lasche verhindert, wobei die Lasche (26) in dem ersten Betriebszustand dazu eingerichtet ist, zu ermöglichen, Festkörperpartikel in dem unteren Abschnitt (24) des Behälterkörpers (2) zu sammeln und anzuhäufen,
wobei die Abgabelasche (26) ferner dazu eingerichtet ist, einen zweiten Betriebszustand zu definieren, wobei sie den Fluiddurchgang von der gleichen Lasche ermöglicht, wobei die Lasche (26) in dem zweiten Betriebszustand dazu eingerichtet ist, zu ermöglichen, dass Fluid und die Festkörperpartikel abzugeben, welche an dem unteren Abschnitt (24) des Behälterkörpers (2) angehäuft worden sind.

## Revendications

1. Séparateur de particules solides-fluides (1) comprenant :
- un corps de retenue (2) définissant un compartiment de logement (3),
- au moins un orifice d'entrée (4) de fluide,
- au moins un orifice de sortie (5) de fluide,
- un déflecteur (6) engagé à l'intérieur du compartiment de logement (3) et fonctionnellement interposé entre l'orifice d'entrée (4) et l'orifice de sortie (5),
**caractérisé en ce que** le déflecteur (6) comprend un corps laminaire définissant une forme d'arc et s'étendant longitudinalement le long d'un sens de développement (D) prédéterminé ou d'un axe entre une première et une seconde extrémité longitudinale (6a, 6b),
le compartiment de logement (3) comprenant :
- une première chambre (7) délimitée par une surface latérale interne (8) d'une paroi latérale (9) du déflecteur (6), et
- une seconde chambre (11) délimitée au moins partiellement par une surface latérale interne (12) du corps de retenue (2) et s'étendant au moins partiellement à l'extérieur du déflecteur (6), la première et la seconde chambre (7, 11) étant directement en communication fluidiquement l'une avec l'autre ;
l'orifice d'entrée (4) étant directement en communication fluidiquement avec ladite première chambre (7), l'orifice de sortie (5) étant directement en communication fluidiquement avec ladite seconde chambre (11) et la paroi latérale (9) du déflecteur (6) comprenant un nombre prédéterminé d'éléments de déflexion de flux (22, 23) émergeant de la paroi latérale (9) elle-même et conçus pour intercepter et dévier au moins une partie du flux de fluide entrant dans le séparateur (1),
la seconde chambre (11) comprenant un premier compartiment (11 a) axialement et immédiatement consécutif de la première chambre (7), le premier compartiment (11a) étant délimité par la surface latérale interne (12) du corps de retenue (2),
la seconde chambre (11) comprenant en outre un second compartiment (11b) directement interposé entre le premier compartiment (11 a) et l'orifice de sortie (5) du séparateur (1), le second compartiment (11b) étant défini entre la surface latérale interne (12) du corps de retenue (2) et une surface latérale externe (13) de la paroi latérale (9) du déflecteur (6), la première chambre (7) communiquant directement fluidiquement avec l'orifice d'entrée (4), la seconde chambre (11) étant directement en communication, sur un côté, avec la première chambre (7) et, sur l'autre côté, avec l'orifice de sortie (5),
la première chambre (7) étant directement interposée entre l'orifice d'entrée (4) et la seconde chambre (11), la seconde chambre (11) étant directement interposée entre la première chambre (7) et l'orifice de sortie (5).

2. Séparateur selon la revendication précédente, le déflecteur (6) comprenant un corps s'étendant le long d'un sens de développement (D) prédéterminé, et le séparateur (1) comprenant une pluralité d'éléments de déflexion de flux (22, 23) faisant saillie dans le périmètre depuis la paroi latérale (9) du déflecteur sensiblement à la même hauteur du déflecteur (6) le long du sens de développement (D) selon un sens pénétrant dans la première chambre (7).

3. Séparateur selon la revendication précédente, comprenant au moins deux séries d'éléments principaux (22) faisant saillie dans le périmètre depuis la surface latérale interne (8) du déflecteur (6), chaque série comprenant une pluralité d'éléments principaux (22) sensiblement placés à la même hauteur le long d'un sens de développement (D) du déflecteur (6), les deux séries étant espacées l'une de l'autre le long dudit sens de développement (D) du déflecteur (6), l'élément principal (22) comprenant une portion de fixation (22a) directement engagée avec la surface latérale interne (8) du déflecteur (6), et s'étendant le long d'une trajectoire en forme d'arc pénétrant vers la première chambre (7) du compartiment de logement (3),
l'élément principal (22) comprenant une portion faisant saillie (22b) s'étendant, continuellement, depuis la portion de fixation (22a) vers un sens pénétrant dans la première chambre (7) du compartiment de logement (3), la portion faisant saillie (22b) s'étendant le long d'un sens droit.

4. Séparateur selon la revendication 3, l'élément principal (22) de l'élément de déflexion de flux comprenant un corps laminaire définissant un onglet, l'onglet définissant sur la paroi latérale du déflecteur (6) une ouverture (35) passant à travers la paroi latérale (9) du déflecteur (6), définie vers l'arrière de l'onglet entre l'onglet lui-même et un contour d'une encoche sur la paroi latérale et l'onglet de l'élément principal (22) faisant preuve d'un contour sensiblement en « C » ou en « U » ou en « ω ».

5. Séparateur selon l'une quelconque des revendications précédentes, l'élément de déflexion de flux comprenant au moins un élément auxiliaire (23) faisant saillie depuis une surface latérale externe (13) de la paroi latérale (9) du déflecteur (6) selon un sens sortant de la première chambre (7), la pluralité des éléments auxiliaires (23) étant interposés, le long du sens de développement (D) du déflecteur (6), entre deux séries consécutives d'éléments principaux (22).

6. Séparateur selon l'une quelconque des revendications précédentes, le déflecteur (6) étant un corps laminaire en une pièce et étant fabriqué par pliage d'un corps laminaire plat.

7. Séparateur selon l'une quelconque des revendications précédentes, le déflecteur (6) comprenant un corps s'étendant le long d'un sens de développement (D) prédéterminé, le déflecteur (6) comprenant une assise traversante (20) s'étendant le long du sens de développement (D) du déflecteur (6) lui-même, délimité par la surface latérale interne (8) et définissant au moins partiellement ladite première chambre (7), la première et la seconde chambre (7, 11) communiquant à travers ladite assise traversante (20), la surface latérale interne (8) du déflecteur (6) définissant, selon une section transversale orthogonale par rapport au sens de développement (D) du déflecteur (6) lui-même, un contour irrégulier dans le périmètre et la surface latérale interne (8) du déflecteur (6) définissant, selon une section transversale orthogonale par rapport au sens de développement (D) du déflecteur (6) lui-même, un contour ouvert.

8. Séparateur selon l'une quelconque des revendications précédentes, le déflecteur (6) comprenant un passage latéral conçu pour faire communiquer directement fluidiquement la première et la seconde chambre (7, 11), le déflecteur (6) comprenant une rainure (21) traversant la paroi latérale (9) et s'étendant depuis la première jusqu'à la seconde extrémité longitudinale (6a, 6b) tout le long du développement longitudinal du déflecteur (6).

9. Séparateur selon l'une quelconque des revendications précédentes, la première chambre (7) étant directement fluidiquement en communication avec l'orifice d'entrée (4) à travers au moins une ouverture traversante (10) placée au niveau de la paroi latérale (9) du déflecteur (6), la seconde chambre (11) communiquant directement avec l'orifice de sortie (5), la rainure traversante (21) du déflecteur (6) étant opposée à l'ouverture traversante (10) de la paroi latérale (9) du déflecteur (6) communiquant directement avec l'orifice d'entrée (4).

10. Séparateur selon l'une quelconque des revendications précédentes, le premier compartiment (11a) étant uniquement délimité par une surface latérale interne (12) du corps de retenue (2) et le second compartiment (11b) étant uniquement défini entre la surface latérale interne (12) du corps de retenue (2) et une surface latérale externe (13) de la paroi latérale (9) du déflecteur (6).

11. Séparateur selon l'une quelconque des revendications précédentes, le premier compartiment (11 a) de la seconde chambre (11) communiquant directement fluidiquement avec la première chambre (7), tandis que le second compartiment (11b) de la seconde chambre (11) communiquant directement fluidiquement avec l'orifice de sortie (5).

12. Séparateur selon l'une quelconque des revendications précédentes, comprenant au moins un dispositif magnétique (14) engagé avec le corps de retenue (2) et conçu pour attirer les particules ferreuses présentes dans le fluide, le dispositif magnétique (14) étant placé dans le compartiment de logement (3) et/ou étant engagé à l'extérieur du corps de retenue (2).

13. Séparateur selon la revendication 12, le dispositif magnétique (14) faisant preuve d'une forme allongée, s'étendant tout le long de la première chambre (7) et au moins partiellement à l'intérieur du premier compartiment (11a) de la seconde chambre (11), et le dispositif magnétique (14) comprenant au moins un boîtier (15) ayant un volume fermé recevant à l'intérieur au moins un aimant (16), le boîtier (15) étant interposé entre l'aimant (16) et le déflecteur (6),
le corps de retenue (2) comprenant une ouverture traversante (17), distincte et séparée de l'orifice d'entrée (4) et de l'orifice de sortie (5) du séparateur (1) lui-même, conçue pour permettre l'accès depuis l'extérieur dans le compartiment de logement (3), le corps de retenue (2), au niveau de ladite ouverture traversante (17) du même corps de retenue (2), comprenant une portion d'engagement (18),
et le dispositif magnétique (14) étant au moins partiellement inséré dans le compartiment de logement (3) par l'intermédiaire de l'ouverture traversante (17) du corps de retenue (2), le dispositif magnétique (14) comprenant une portion d'engagement respective (19) conçue pour coopérer avec la portion d'engagement (18) du corps de retenue (2) pour contraindre le dispositif magnétique (14) au séparateur (1).

14. Séparateur selon l'une quelconque des revendications précédentes, le déflecteur (6) se développant le long d'un axe longitudinal, l'orifice de sortie (5) comprenant une conduite (33) s'étendant le long d'un axe de développement transversal respectif vers l'axe longitudinal du déflecteur (6), l'axe de développement de la conduite (33) de l'orifice de sortie (5) entrant sensiblement en intersection avec l'axe longitudinal du déflecteur (6), la conduite (33) de l'orifice de sortie (5) étant engagée avec une paroi latérale du corps de retenue (2) et étant conçue pour permettre d'émettre le fluide arrivant depuis le déflecteur (6) par l'intermédiaire du corps de retenue (2),
la conduite (33) de l'orifice de sortie (5) étant au moins partiellement coaxiale avec la conduite (32) de l'orifice d'entrée (4).

15. Séparateur selon l'une quelconque des revendications précédentes, le corps de retenue (2) comprenant un corps tubulaire s'étendant le long d'un sens de développement prévalent entre une première et une seconde portion d'extrémité (2a, 2b),
le compartiment de logement (3) du corps de retenue (2), au niveau de la première portion d'extrémité (2a), recevant le déflecteur (6) pour définir ladite première chambre (7), le compartiment de logement (3) du corps de retenue (2), au niveau de la seconde portion d'extrémité (2b), définissant ladite seconde chambre (11),
lesdites première et seconde chambre (7, 11) étant immédiatement consécutives le long du sens de développement prévalent du corps de retenue (2),
au niveau de la seconde portion d'extrémité (2b), le corps de retenue (2) comprenant une portion inférieure (24) conçue pour permettre de recueillir les particules solides entraînées par le fluide circulant dans le séparateur (1),
la portion inférieure (24) faisant preuve d'un orifice de sortie auxiliaire (34) traversant communiquant directement fluidiquement avec la seconde chambre (11), le séparateur (1) comprenant en outre un robinet d'évacuation (26) engagé au niveau de l'orifice de sortie auxiliaire (34),
le robinet d'évacuation (26) étant conçu pour définir un premier état de fonctionnement lequel empêche le passage de fluide depuis le même robinet, le robinet (26), dans le premier état de fonctionnement, étant conçu pour permettre de recueillir et d'accumuler les particules solides dans la portion inférieure (24) du corps de retenue (2), le robinet d'évacuation (26) étant en outre conçu pour définir un second état de fonctionnement lequel permet le passage de fluide depuis le même robinet, le robinet (26), dans le second état de fonctionnement, étant conçu pour permettre d'évacuer le fluide et les particules solides accumulées sur la portion inférieure (24) du corps de retenue (2).
